# EUROPEAN PATENT APPLICATION

(11) **EP 4 847 223 A1**
(43) Date of publication of application: **02.12.2026**
(21) Application number: 24920121.1
(22) Date of filing: 25.11.2024
(51) Int. Cl.: B29B 15/12, C08J 5/04, B29K 77/00, B29K 105/10

(54) **FIBER-REINFORCED COMPOSITE MATERIAL, MOLDED ARTICLE, AND PRODUCTION METHOD FOR FIBER-REINFORCED COMPOSITE MATERIAL**

(30) Priority: 22.01.2024 JP 2024007471
(71) Applicant: MITSUBISHI GAS CHEMICAL COMPANY, INC., Chiyoda-ku Tokyo 100-8324 (JP)
(72) Inventor: ITO, Keisuke, Hiratsuka-shi, Kanagawa 254-0016 (JP)
(74) Representative: Vossius & Partner Patentanwälte Rechtsanwälte mbB
(86) International application number: PCT/JP2024/041571
(87) International publication number: WO 2025/158764

(57) **Abstract**

A fiber-reinforced composite material using natural fibers. A fiber-reinforced composite material, including: a thermoplastic resin having a melting point of from 180 to 220°C; and natural fibers, wherein the natural fibers are impregnated with at least a portion of the thermoplastic resin; and the natural fibers are oriented in at least one direction.

## Description

### Technical Field

The present invention relates to a fiber-reinforced composite material, a formed article, and a method for producing the fiber-reinforced composite material. In particular, the present invention relates to a fiber-reinforced composite material and the like using natural fibers as reinforcing fibers.

### Background Art

In recent years, there has been an increasing demand for fiber-reinforced composite materials using thermoplastic resins and reinforcing fibers, including carbon fiber-reinforced thermoplastic resins (CFRTP). Among the thermoplastic resins, fiber-reinforced composite materials using a polyamide resin have been studied (Patent Documents 1 and 2).

### Citation List

### Patent Document

Patent Document 1: JP 2023-147962 A
Patent Document 2: WO 2020/174871

### Summary of Invention

### Technical Problem

On the other hand, in recent years, fiber-reinforced composite materials are sometimes used for formed articles required to have designability. In applications required to have designability, natural fibers are often used as reinforcing fibers. However, it has been found that, unlike carbon fibers and glass fibers, natural fibers do not facilitate the production of fiber-reinforced composite materials in some cases.

An object of the present invention is to solve such a problem and to obtain a fiber-reinforced composite material that uses natural fibers and that can provide a formed article with excellent designability.

### Solution to Problem

The present inventors have conducted a study on the basis of the above problem, and as a result, have found that the above problem can be solved by adjusting a melting point of a thermoplastic resin with which natural fibers are impregnated to a predetermined range.

Specifically, the above problem has been solved by the following means.
<1> A fiber-reinforced composite material, including:
   a thermoplastic resin having a melting point of from 180 to 220°C; and
   natural fibers, wherein the natural fibers are impregnated with at least a portion of the thermoplastic resin; and
   the natural fibers are oriented in at least one direction.
<2> The fiber-reinforced composite material according to <1>, wherein
   the thermoplastic resin includes a polyamide resin.
<3> The fiber-reinforced composite material according to <1>, wherein
   the thermoplastic resin includes a polyamide resin containing diamine units and dicarboxylic acid units, wherein
   70 mol% or greater of the diamine units are derived from a xylylenediamine.
<4> The fiber-reinforced composite material according to <1>, wherein
   the thermoplastic resin includes a polyamide resin containing diamine units and dicarboxylic acid units, wherein
   70 mol% or greater of the diamine units are derived from a xylylenediamine; and
   70 mol% or greater of the dicarboxylic acid units are derived from an α,ω-linear aliphatic dicarboxylic acid having from 4 to 20 carbons.
<5> The fiber-reinforced composite material according to any one of <1> to <4>, wherein
   the natural fibers are twisted.
<6> The fiber-reinforced composite material according to any one of <1> to <5>, wherein
   the fiber-reinforced composite material is a prepreg.
<7> The fiber-reinforced composite material according to <6>, wherein
   the natural fibers are continuous fibers and are oriented in one direction; and
   the fiber-reinforced composite material is a prepreg in which the natural fibers are impregnated with the thermoplastic resin.
<8> The fiber-reinforced composite material according to <6>, wherein
   the natural fibers are a woven fabric; and
   the fiber-reinforced composite material is a prepreg in which the natural fibers are impregnated with the thermoplastic resin.
<9> A formed article formed from the fiber-reinforced composite material according to any one of <1> to <8>.
<10> A method for producing the fiber-reinforced composite material according to any one of <1> to <8>, the method including:
   impregnating the natural fibers with thermoplastic resin at a temperature of from 5 to 30°C above a melting point of the thermoplastic resin and under an atmosphere having an oxygen concentration of less than 500 ppm.
<11> The method for producing the fiber-reinforced composite material according to <10>, wherein
   the impregnation is performed at a pressure of from 0.1 to 2.0 MPa.

### Advantageous Effects of Invention

According to the present invention, it has become possible to provide a formed article with excellent designability and obtain a fiber-reinforced composite material that uses natural fibers.

### Description of Embodiments

Embodiments for carrying out the present invention (hereinafter referred to simply as "the present embodiment") will next be described in detail. The present embodiment described below is an example for describing the present invention, and the present invention is not limited only to the present embodiment.

In the present specification, numerical values described before and after the term "to" are respectively the lower limit and the upper limit of a range including the numerical values. In addition, any combination of the upper and lower limits of the numerical values in the present specification is included as an example of the present embodiment.

In the present specification, various physical property values and characteristic values are those at 23°C unless otherwise noted.

The fiber-reinforced composite material of the present embodiment is characterized by including a thermoplastic resin having a melting point of from 180 to 220°C and natural fibers, wherein the natural fibers are impregnated with at least a portion of the thermoplastic resin, and the natural fibers are oriented in at least one direction. Such a constitution makes it possible to provide a fiber-reinforced composite material using natural fibers and having excellent designability when molded.

Fiber-reinforced composite materials using carbon fibers or glass fibers could be easily produced by impregnating reinforcing fibers with a thermoplastic resin under pressurization while heating and melting the thermoplastic resin. However, when the same procedure was performed using natural fibers, it was found that a fiber-reinforced composite material was not easily obtained. The reason for this is predicted to be that natural fibers are oxidized and decomposed at about 200°C.

In the present embodiment, it has been found that, by using a thermoplastic resin having a melting point of from 180 to 220°C and impregnating natural fibers with the thermoplastic resin having a melting point of from 180 to 220°C under an atmosphere having a low oxygen concentration, the thermoplastic resin can be impregnated even when natural fibers are used. In addition, the designability of such a formed article can also be made excellent.

Hereinafter, details of the present embodiment will be described.

### <Thermoplastic Resin Having Melting Point of from 180 to 220°C>

The fiber-reinforced composite material of the present embodiment contains a thermoplastic resin having a melting point of from 180 to 220°C.

The melting point of the thermoplastic resin is preferably 215°C or lower, more preferably 210°C or lower, and still more preferably 208°C or lower, and is preferably 183°C or higher. With the melting point of the thermoplastic resin being equal to or lower than the upper limit, the molding temperature can be suppressed, and degradation of the natural fibers tends to be suppressed more effectively.

The fiber-reinforced composite material of the present embodiment may contain only one type of thermoplastic resin having a melting point of from 180 to 220°C, or may contain two or more types thereof. When two or more types are contained, the melting point of the thermoplastic resin having a melting point of from 180 to 220°C refers to a melting point of the thermoplastic resin having the highest melting point among them.

The melting point of the thermoplastic resin is measured in accordance with the description in the Examples below.

The thermoplastic resin having a melting point of from 180 to 220°C used in the present embodiment is not particularly limited as long as it is a crystalline resin, and examples thereof include a polyamide resin, a polyacetal resin, and a crystalline thermoplastic polyester resin. Among them, a polyamide resin is preferable, and a xylylenediamine-based polyamide resin, which will be described in detail below, is more preferable.

For details of the polyacetal resin, reference can be made to the disclosures in paragraphs 0009 to 0014 of JP 2021-098767 A, the contents of which are incorporated herein by reference.

For details of the crystalline polyester resin, reference can be made to the disclosures in paragraphs 0023 to 0029 of JP 2023-037620 A, the contents of which are incorporated herein by reference.

The polyamide resin used in the present embodiment is not particularly limited in terms of its type, and may be an aliphatic polyamide resin or a semi-aromatic polyamide resin, but is more preferably a semi-aromatic polyamide resin.

Examples of the aliphatic polyamide resin include polyamide 4, polyamide 46, polyamide 6, polyamide 66, polyamide 666, polyamide 610, polyamide 11, and polyamide 12.

The polyamide resin used in the present embodiment preferably includes a semi-aromatic polyamide resin, as described above. For example, 90 mass% or greater of the polyamide resin contained in the resin composition of the present embodiment is more preferably a semi-aromatic polyamide resin. Here, the term "semi-aromatic polyamide resin" refers to a polyamide resin including diamine units and dicarboxylic acid units, in which from 20 to 80 mol% (preferably from 30 to 80 mol%, and more preferably from 40 to 70 mol%) of the total structural units of the diamine units and the dicarboxylic acid units are structural units containing an aromatic ring.

Examples of the semi-aromatic polyamide resin include a terephthalic acid-based polyamide resin (polyamide 6T, polyamide 9T, and polyamide 10T) and a xylylenediamine-based polyamide resin described below.

The polyamide resin used in the present embodiment may be a recycled product (including a recovered product, a material-recycled product, and a chemically recycled product) or a rejected product of the polyamide resin, or a scrap material generated when a formed article is molded from a resin composition.

In the present embodiment, the polyamide resin is preferably a polyamide resin containing diamine units and dicarboxylic acid units, in which 70 mol% or greater of the diamine units are derived from a xylylenediamine (hereinafter sometimes referred to as "xylylenediamine-based polyamide resin").

In the xylylenediamine-based polyamide resin, more preferably 75 mol% or greater, still more preferably 80 mol% or greater, even more preferably 90 mol% or greater, even still more preferably 95 mol% or greater, and particularly even more preferably 99 mol% or greater of the diamine units are derived from a xylylenediamine (preferably p-xylylenediamine and/or m-xylylenediamine).

The xylylenediamine is preferably p-xylylenediamine and/or m-xylylenediamine. The xylylenediamine preferably includes from 0 mol% to 100 mol% of m-xylylenediamine and from 100 mol% to 0 mol% of p-xylylenediamine (provided that the total of m-xylylenediamine and p-xylylenediamine does not exceed 100 mol%), more preferably includes from 10 mol% to 100 mol% of m-xylylenediamine and from 90 mol% to 0 mol% of p-xylylenediamine, still more preferably includes from 20 mol% to 100 mol% of m-xylylenediamine and from 80 mol% to 0 mol% of p-xylylenediamine, even more preferably includes from 40 mol% to 100 mol% of m-xylylenediamine and from 60 mol% to 0 mol% of p-xylylenediamine, and even still more preferably includes from 60 mol% to 100 mol% of m-xylylenediamine and from 40 mol% to 0 mol% of p-xylylenediamine.

In the xylylenediamine-based polyamide resin, the total of p-xylylenediamine units and m-xylylenediamine units accounts for preferably 80 mol% or greater, more preferably 85 mol% or greater, still more preferably 90 mol% or greater, even more preferably 95 mol% or greater, even still more preferably 98 mol% or greater, and yet even still more preferably 99 mol% or greater of the diamine units. The upper limit of the total of the p-xylylenediamine units and the m-xylylenediamine units is 100 mol%.

Examples of the diamine that can be used as a raw material diamine component of the xylylenediamine-based polyamide resin, other than m-xylylenediamine and p-xylylenediamine, may include an aliphatic diamine, such as tetramethylenediamine, pentamethylenediamine, 2-methylpentanediamine, hexamethylenediamine, heptamethylenediamine, octamethylenediamine, nonamethylenediamine, decamethylenediamine, dodecamethylenediamine, 2,2,4-trimethylhexamethylenediamine, and 2,4,4-trimethylhexamethylenediamine; an alicyclic diamine, such as 1,3-bis(aminomethyl)cyclohexane, 1,4-bis(aminomethyl)cyclohexane, 1,3-diaminocyclohexane, 1,4-diaminocyclohexane, bis(4-aminocyclohexyl)methane, 2,2-bis(4-aminocyclohexyl) propane, bis(aminomethyl)decalin, and bis(aminomethyl)tricyclodecane; and a diamine having an aromatic ring, such as bis(4-aminophenyl)ether, p-phenylenediamine, and bis(aminomethyl)naphthalene. One of these diamines, or a mixture of two or more of these may be used.

Meanwhile, in the xylylenediamine-based polyamide resin, preferably 70 mol% or greater, more preferably 75 mol% or greater, still more preferably 80 mol% or greater, even more preferably 90 mol% or greater, even still more preferably 95 mol% or greater, and particularly even more preferably 99 mol% or greater of the dicarboxylic acid units are preferably derived from an α,ω-linear aliphatic dicarboxylic acid having from 4 to 20 carbons (preferably an α,ω-linear aliphatic dicarboxylic acid having 11 or more carbons and preferably an α,ω-linear aliphatic dicarboxylic acid having 14 or less carbons).

Examples of the α,ω-linear aliphatic dicarboxylic acid having from 4 to 20 carbons, which is preferably used as a raw material dicarboxylic acid component of the xylylenediamine-based polyamide resin, may include an aliphatic dicarboxylic acid, such as succinic acid, glutaric acid, adipic acid, azelaic acid, sebacic acid, undecanedioic acid, 1,10-dodecanedioic acid, and 1,12-tetradecanedioic acid. One of these α,ω-linear aliphatic dicarboxylic acids, or a mixture of two or more of these may be used. Among these, at least one of sebacic acid, 1,10-dodecanedioic acid, or 1,12-tetradecanedioic acid is preferable, 1,10-dodecanedioic acid and/or 1,12-tetradecanedioic acid is more preferable, and 1,10-dodecanedioic acid is still more preferable, because a melting point of the polyamide resin is in an appropriate range for molding.

Examples of the dicarboxylic acid component other than the above may include a phthalic acid compound, such as isophthalic acid, terephthalic acid, and orthophthalic acid; and an isomer of naphthalenedicarboxylic acid, such as 1,2-naphthalenedicarboxylic acid, 1,3-naphthalenedicarboxylic acid, 1,4-naphthalenedicarboxylic acid, 1,5-naphthalenedicarboxylic acid, 1,6-naphthalenedicarboxylic acid, 1,7-naphthalenedicarboxylic acid, 1,8-naphthalenedicarboxylic acid, 2,3-naphthalenedicarboxylic acid, 2,6-naphthalenedicarboxylic acid, and 2,7-naphthalenedicarboxylic acid. One of these dicarboxylic acid components, or a mixture of two or more of these may be used.

Note that the xylylenediamine-based polyamide resin includes diamine units and dicarboxylic acid units as main components, but structural units other than these are not entirely excluded. Of course, the xylylenediamine-based polyamide resin may include a lactam such as ε-caprolactam and laurolactam, and/or an aliphatic aminocarboxylic acid unit such as aminocaproic acid and aminoundecanoic acid. Here, the term "main component" indicates that, of the structural units constituting the xylylenediamine-based polyamide resin, the total number of the diamine units and the dicarboxylic acid units is the largest among all the structural units. In the present embodiment, the total of the diamine units and the dicarboxylic acid units in the xylylenediamine-based polyamide resin preferably accounts for 90 mass% or greater, more preferably 95 mass% or greater, still more preferably 97 mass% or greater, and even more preferably 99 mass% or greater, of all the structural units.

The xylylenediamine-based polyamide resin preferably also uses a polyamide resin (biomass polyamide resin) produced by using a biomass raw material. Use of a biomass polyamide resin can reduce environmental load.

A raw material monomer that has been mass balance certified (ISCC PLUS) can also be used. The term "mass balance certification" means that degrees of usage of reusable raw materials and raw biomaterials for each factory or production facility and degrees of production and shipment of products are quantified and certified together with quality.

The content of the xylylenediamine-based polyamide resin in 100 parts by mass of the thermoplastic resin having a melting point of from 180 to 220°C contained in the fiber-reinforced composite material of the present embodiment is preferably 80 parts by mass or greater, more preferably 90 parts by mass or greater, and still more preferably 95 parts by mass or greater, may be 99 parts by mass or greater, and may be 100 parts by mass or less.

The lower limit of the number average molecular weight (Mn) of the thermoplastic resin having a melting point of from 180 to 220°C contained in the fiber-reinforced composite material of the present embodiment is preferably 6000 or greater, more preferably 8000 or greater, and still more preferably 10000 or greater, and is preferably 100000 or less, and more preferably 50000 or less.

The number average molecular weight is a value in terms of polystyrene as measured by gel permeation chromatography (GPC). More specifically, the number average molecular weight can be measured in accordance with the disclosure in paragraph 0047 of JP 2018-165298 A, the contents of which are incorporated herein by reference.

The content of the thermoplastic resin having a melting point of from 180 to 220°C in the fiber-reinforced composite material of the present embodiment is preferably 90 mass% or less, more preferably 80 mass% or less, still more preferably 70 mass% or less, even more preferably 60 mass% or less, and even still more preferably 50 mass% or less, and is preferably 20 mass% or greater, more preferably 25 mass% or greater, still more preferably 28 mass% or greater, even more preferably 30 mass% or greater, and even still more preferably 35 mass% or greater, in 100 mass% of the fiber-reinforced composite material. With the content of the thermoplastic resin having a melting point of from 180 to 220°C being equal to or less than the upper limit, the mechanical properties of the resulting formed article tend to be improved. With the content of the thermoplastic resin having a melting point of from 180 to 220°C being equal to or greater than the lower limit, the impregnation time can be shortened, which tends to suppress degradation of the natural fibers more effectively.

The fiber-reinforced composite material of the present embodiment may contain only one type of thermoplastic resin having a melting point of from 180 to 220°C, or may contain two or more types thereof. When two or more types are contained, the total amount is preferably within the above range.

The fiber-reinforced composite material of the present embodiment may or may not contain an amorphous thermoplastic resin. Preferably, the fiber-reinforced composite material of the present embodiment is substantially free of an amorphous thermoplastic resin. The term "substantially free" means that the content of an amorphous thermoplastic resin is less than 10 mass%, preferably less than 5 mass%, more preferably less than 3 mass%, and still more preferably less than 1 mass% of the content of the thermoplastic resin contained in the fiber-reinforced composite material.

### <Natural Fiber>

The fiber-reinforced composite material of the present embodiment contains natural fibers.

Examples of the natural fiber include a plant fiber and an animal fiber, and the plant fiber is preferable. Examples of the plant fiber include cotton, hemp, kapok, palm fiber, sisal fiber, banana fiber, coconut fiber, and bamboo fiber. Examples of the animal fiber include wool, goat hair, cashmere, mohair, angora, alpaca, camel hair, and silk. In the present embodiment, the natural fibers preferably include hemp.

The natural fibers used in the present embodiment are preferably continuous natural fibers. The term "continuous natural fibers" or "natural continuous fibers" refers to natural fibers having an average fiber length of greater than 6 mm, preferably an average fiber length of greater than 10 mm, preferably an average fiber length of greater than 12 mm, more preferably an average fiber length of 30 mm or greater, and still more preferably an average fiber length of 10 cm or greater. The average fiber length of the natural continuous fibers used in the present embodiment is not particularly limited, but is preferably 1 m or greater, more preferably 100 m or greater, still more preferably 1000 m or greater, and is preferably 20000 m or less, more preferably 10000 m or less, still more preferably 7000 m or less, from the viewpoint of improving molding processability.

The natural fibers may be treated with a surface treatment agent and/or a sizing agent.

The natural fibers may be twisted or untwisted. By twisting the natural fibers, a formed article with good designability can be produced even if the natural fibers are not treated with a surface treatment agent and/or a sizing agent.

The natural fibers are oriented in at least one direction.

Examples of natural fibers oriented in one direction include natural fibers obtained by opening roving fibers of the natural fibers. Note that roving fibers of the natural fibers that are twisted are also included in the examples of the natural fibers oriented in one direction in the present embodiment.

Examples of natural fibers oriented in two directions include a woven fabric of the natural fibers. Examples of the woven fabric include plain weave, twill weave, and satin weave.

The content of the natural fibers in the fiber-reinforced composite material of the present embodiment is preferably 80 parts by mass or greater, more preferably 90 parts by mass or greater, still more preferably 100 parts by mass or greater, even more preferably 110 parts by mass or greater, even still more preferably 120 parts by mass or greater, and yet even still more preferably 125 parts by mass or greater, and is preferably 81 parts by mass or less, more preferably 17 parts by mass or less, still more preferably 160 parts by mass or less, even more preferably 150 parts by mass or less, and even still more preferably 140 parts by mass or less, with respect to 100 parts by mass of the thermoplastic resin having a melting point of from 180 to 220°C. With the content of the natural fibers being equal to or greater than the lower limit, the mechanical properties of the resulting formed article tend to be further improved. With the content of the natural fibers being equal to or less than the upper limit, the impregnation time can be shortened, which tends to suppress degradation of the natural fibers more effectively.

The fiber-reinforced composite material of the present embodiment may contain only one type of natural fibers, or may contain two or more types thereof. When two or more types are contained, the total amount is preferably within the above range.

The fiber-reinforced composite material of the present embodiment may or may not contain a filler other than natural fibers.

An example of the fiber-reinforced composite material of the present embodiment is substantially free of a filler other than natural fibers. The term "substantially free" means that the content of other fillers in the fiber-reinforced composite material is preferably less than 10 mass%, more preferably less than 5 mass%, still more preferably less than 3 mass%, and even more preferably less than 1 mass% of the content of the natural fibers.

### <Other Components>

The fiber-reinforced composite material of the present embodiment may or may not contain other components excluding the thermoplastic resin and the natural fibers.

As the other components described above, an additive, such as a filler other than natural fibers, a nucleating agent, an antioxidant, a stabilizer such as a thermal stabilizer, a hydrolysis-resistance improving agent, a weather resistant stabilizer, a matting agent, an ultraviolet absorber, a nucleating agent, a plasticizer, a dispersant, a flame retardant, an antistatic agent, a discoloration inhibitor, an anti-gelling agent, a colorant, and a release agent, can be added. For details of these, reference can be made to the disclosures in paragraphs 0130 to 0155 of JP 4894982 B and the disclosures in paragraphs 0047 to 0103 of WO 2021/241471, the contents of which are incorporated herein by reference.

When the fiber-reinforced composite material of the present embodiment contains the other components described above, it is preferable to melt and knead the other components with the thermoplastic resin to form a resin composition, and then form a composite material with the natural fibers. For the resin composition, reference can be made to the disclosure in paragraph 0044 of WO 2023/188549, the contents of which are incorporated herein by reference.

The content of these other components is preferably less than 10 mass%, more preferably less than 5 mass%, still more preferably less than 3 mass%, and even more preferably less than 1 mass% of the fiber-reinforced composite material.

In the fiber-reinforced composite material of the present embodiment, the total of the thermoplastic resin (preferably a polyamide resin, more preferably a xylylenediamine-based polyamide resin) and the natural fibers preferably accounts for 90 mass% or greater, and more preferably 95 mass% or greater, and may account for 99 mass% or greater, and is 100 mass% or less, of the fiber-reinforced composite material.

### <Fiber-Reinforced Composite Material>

In the fiber-reinforced composite material of the present embodiment, the natural fibers are impregnated with the thermoplastic resin.

That is, an example of the fiber-reinforced composite material of the present embodiment is a prepreg. In the prepreg, the natural fibers may be oriented in one direction and impregnated with the polyamide resin, or the natural fibers may be a woven fabric and impregnated with the polyamide resin. Other impregnation forms are also possible.

The degree of impregnation of the natural fibers with the polyamide resin in the continuous reinforced composite material is preferably 90% or greater, and more preferably 95% or greater. The upper limit of the degree of impregnation is preferably 100%.

### <<Method for Measuring Degree of Impregnation>>

The cross-section of mixed fiber yarns is collectively cut out in a direction perpendicular to the longitudinal direction of the continuous reinforcing fibers, and embedded in an epoxy resin. Then, a surface corresponding the cross-section of the mixed fibers yarn is polished, and an image of the cross-sectional view is captured using an ultra-deep color 3D shape measuring microscope. The above cross-section of the mixed fiber yarns embedded in the epoxy resin is observed with a digital microscope. In the obtained cross-sectional image, a region where the continuous reinforcing fibers are impregnated with thermoplastic resin fibers (a region where the continuous reinforcing fibers are impregnated with melted thermoplastic resin fibers) is selected using image analysis software ImageJ, and the area of the region is measured. The degree of impregnation is expressed as (the region where continuous reinforcing fibers are impregnated with thermoplastic resin fibers)/(the cross-sectional area) (unit: %).

For the ultra-deep color 3D shape measuring microscope, a VK-9500 (controller section)/VK-9510 (measurement section) (available from Keyence Corporation) was used.

The thickness of the fiber-reinforced composite material is not particularly limited, but is preferably 50 µm or greater, more preferably 70 µm or greater, still more preferably 90 µm or greater, and even more preferably 100 µm or greater. The upper limit of the thickness is preferably 2000 µm or less, more preferably 1750 µm or less, and still more preferably 1500 µm or less.

In the production of the fiber-reinforced composite material of the present embodiment, the fiber-reinforced composite material is preferably obtained by impregnating the natural fibers with the thermoplastic resin at a temperature of from 5 to 30°C above the melting point of the thermoplastic resin and under an atmosphere having an oxygen concentration of less than 500 ppm. By performing the impregnation at a temperature equal to or higher than the lower limit, favorable impregnation can be achieved. In addition, by performing the impregnation at a temperature equal to or lower than the upper limit, decomposition of the natural fibers can be effectively suppressed, and a good prepreg can be obtained.

The impregnation temperature is preferably not higher than 28°C above the melting point, more preferably not higher than 25°C above the melting point, still more preferably not higher than 20°C above the melting point, and is preferably not lower than 7°C above the melting point, more preferably not lower than 10°C above the melting point, and still more preferably not lower than 12°C above the melting point, and may be not lower than 15°C above the melting point. With the impregnation temperature being equal or lower than the upper limit, degradation of the natural fibers tends to be effectively suppressed. With the impregnation temperature being equal or higher than the lower limit, the melt viscosity during impregnation is reduced, the molding time can be shortened, and degradation of the natural fibers tends to be effectively suppressed.

The impregnation temperature may be constant or may vary from the start to the end of the impregnation. Preferably, 90% or greater of the time from the start to the end of the impregnation, excluding the time of temperature increase at the start of the impregnation and the time of temperature decrease at the end of the impregnation, is included in the above range.

The impregnation is preferably performed under an atmosphere having an oxygen concentration of less than 500 ppm. Since natural fibers are oxidized and decomposed at about 200°C, the impregnation under low oxygen concentration conditions makes it more difficult for the natural fibers to decompose, and a good prepreg is obtained.

Examples of the atmosphere having an oxygen concentration of less than 500 ppm include a nitrogen atmosphere and a vacuum.

The impregnation may be performed under pressurization. The pressure for the pressurization is preferably 0.1 MPa or greater and is preferably 2.0 MPa or less.

### <Applications of Fiber-Reinforced Composite Material>

The fiber-reinforced composite material of the present embodiment can be preferably used as a prepreg, as described above. Additionally, the fiber-reinforced composite material of the present embodiment can be preferably used as a unidirectional (UD) tape.

The fiber-reinforced composite material of the present embodiment may be wound onto a core material during storage, shipping, or the like. That is, the fiber-reinforced composite material of the present embodiment may also be a wound body having a core material and the fiber-reinforced composite material wound onto the core material.

The fiber-reinforced composite material of the present embodiment may be processed and molded as is, or a plurality of layers may be stacked, and then processed and molded. That is, the form of the formed article formed from the fiber-reinforced composite material is not particularly defined.

Examples thereof include: a method for producing a formed article, the method including producing a fiber-reinforced composite material, stacking a plurality of the fiber-reinforced composite materials, and heating and processing them; and a formed article obtained by the method for producing a formed article. The thickness of the thinnest portion of such a formed article can be appropriately defined according to the application or the like, and can be, for example, from 1 mm to 10 mm.

The fields of application of the fiber-reinforced composite material of the present embodiment are not particularly limited, and the fiber-reinforced composite material of the present embodiment is widely used in applications such as components for transportation devices such as automobiles, general mechanical components, precision mechanical components, electronic and electrical device components, OA device components, building materials and building-related components, medical devices, leisure sporting goods, gaming devices, medical products, daily necessities such as food packaging films, and defense and aerospace products.

### Examples

Hereinafter, the present invention will be described more specifically with reference to the Examples. Materials, amounts used, proportions, processing details, and processing procedures described in the following Examples can be appropriately changed without departing from the spirit of the present invention. Thus, the scope of the present invention is not limited to the specific examples described below.

When it is difficult to acquire the measuring instrument or the like used in the Examples because of product discontinuation or the like, another instrument with equivalent performance can be used for the measurements.

### <Raw Materials>

Natural fiber: Hemp fiber, woven fabric, basis weight 200 gsm
Continuous carbon fiber: TR3523, PYROFIL (product name), available from Mitsubishi Chemical Corporation
MXD10: A polyamide resin synthesized according to Synthesis Example 1 described below
MP12: A polyamide resin synthesized according to Synthesis Example 2 described below
MXD12: A polyamide resin synthesized according to Synthesis Example 3 described below
MP10(40): A polyamide resin synthesized according to Synthesis Example 4 described below

### <Synthesis Example 1: Synthesis of MXD10>

Dodecanedioic acid was placed in a jacketed reactor equipped with an agitator, a partial condenser, a cooler, a thermometer, a dripping tank, and a nitrogen gas introduction tube. The reactor was sufficiently purged with nitrogen, and the dodecanedioic acid was heated and melted at 170°C. Then, while the contents were being stirred, m-xylylenediamine (MXDA, available from MITSUBISHI GAS CHEMICAL COMPANY, INC.) was gradually added dropwise so that a molar ratio of the m-xylylenediamine to the sebacic acid became 1:1, and the temperature was increased to 240°C. After the completion of dropwise addition, the temperature was increased to 260°C, and the reaction was continued for 20 minutes. Thereafter, the internal pressure of the reaction system was continuously reduced to 0.08 MPa, and then the reaction was continued. After completion of the reaction, the reactor was pressurized with nitrogen gas to a pressure of 0.2 MPa, the polymer was taken out as a strand from a nozzle at a lower part of the polymerization tank and cooled with water, and the strand was then pelletized with a pelletizer to obtain a pellet.

### <Synthesis Example 2: Synthesis of MP12>

Dodecanedioic acid was placed in a jacketed reactor equipped with an agitator, a partial condenser, a cooler, a thermometer, a dripping tank, and a nitrogen gas introduction tube. The reactor was sufficiently purged with nitrogen, and the dodecanedioic acid was heated and melted at 180°C. Then, while the contents were being stirred, a mixed amine of m-xylylenediamine and p-xylylenediamine (70:30) (MPXDA, available from MITSUBISHI GAS CHEMICAL COMPANY, INC.) was gradually added dropwise so that a molar ratio of the mixed amine to the dodecanedioic acid became 1:1, and the temperature was increased to 290°C. After completion of the dropwise addition, the liquid temperature of 290°C was maintained, and the reaction was continued for 10 minutes. Thereafter, the internal pressure of the reaction system was continuously reduced to 600 Torr over 10 minutes, and then the reaction was continued for 20 minutes. During this, the reaction temperature was continuously increased to 300°C. After completion of the reaction, the reactor was pressurized with nitrogen gas to a pressure of 0.3 MPa, the polymer was taken out as a strand from a nozzle at a lower part of the polymerization tank and cooled with water, and the strand was then pelletized with a pelletizer to obtain a pellet.

### <Synthesis Example 3: Synthesis of MXD12>

Dodecanedioic acid was placed in a jacketed reactor equipped with an agitator, a partial condenser, a cooler, a thermometer, a dripping tank, and a nitrogen gas introduction tube. The reactor was sufficiently purged with nitrogen, and the dodecanedioic acid was heated and melted at 180°C. Then, while the contents were being stirred, m-xylylenediamine (MXDA, available from MITSUBISHI GAS CHEMICAL COMPANY, INC.) was gradually added dropwise so that a molar ratio of the m-xylylenediamine to the dodecanedioic acid became 1:1, and the temperature was increased to 290°C. The liquid temperature of 290°C was maintained, and the reaction was continued for 10 minutes. Thereafter, the internal pressure of the reaction system was continuously reduced to 600 Torr over 10 minutes, and then the reaction was continued for 20 minutes. During this, the reaction temperature was continuously increased to 300°C. After completion of the reaction, the reactor was pressurized with nitrogen gas to a pressure of 0.3 MPa, the polymer was taken out as a strand from a nozzle at a lower part of the polymerization tank and cooled with water, and the strand was then pelletized with a pelletizer to obtain a pellet.

### <Synthesis Example 6: Synthesis of MP10(40)>

Sebacic acid was placed in a jacketed reactor equipped with an agitator, a partial condenser, a cooler, a thermometer, a dripping tank, and a nitrogen gas introduction tube. The reactor was sufficiently purged with nitrogen, and the sebacic acid was heated and melted at 170°C. Then, while the contents were being stirred, a xylylenediamine with a molar ratio of m-xylylenediamine (MPXDA, available from MITSUBISHI GAS CHEMICAL COMPANY, INC.) to p-xylylenediamine (PXDA, available from Showa Denko K.K.) of 60:40 was gradually added dropwise so that a molar ratio of the xylylenediamine to the sebacic acid became 1:1, and the temperature was increased to 240°C. After the completion of dropwise addition, the temperature was increased to 260°C, and the reaction was continued for 20 minutes. Thereafter, the internal pressure of the reaction system was continuously reduced to 0.08 MPa, and then the reaction was continued. After completion of the reaction, the reactor was pressurized with nitrogen gas to a pressure of 0.2 MPa, the polymer was taken out as a strand from a nozzle at a lower part of the polymerization tank and cooled with water, and the strand was then pelletized with a pelletizer to obtain a pellet.

### <Melting Point of Polyamide Resin>

The melting point (Tm) of a polyamide resin was measured through differential scanning calorimetry (DSC) in accordance with ISO 11357, unless otherwise noted.

Specifically, a differential scanning calorimeter was used, and the resin was placed in a measuring pan of the differential scanning calorimeter, and subjected to a pretreatment of heating to a temperature exceeding the melting point at a temperature increase rate of 10°C/min under a nitrogen atmosphere and then performing rapid cooling, thereafter the measurement was performed. As the measurement conditions, the temperature was increased to 280°C at a temperature increase rate of 10°C/min, and then maintained at 280°C for 5 minutes, after which the temperature was decreased to 100°C at a temperature decrease rate of -5°C/min, and the measurement was then performed to determine the melting point (Tm).

The differential scanning calorimeter used was "DSC-60" available from Shimadzu Corporation.

Table 1 lists the melting points of the polyamide resins used in each of the Examples and Comparative Examples.

### Example 1

### <Production of Fiber-Reinforced Composite Material (Prepreg)>

A fiber-reinforced composite material was produced using natural fibers and a thermoplastic resin of the type as indicated in Table 1. Specifically, the thermoplastic resin was processed into a film having a thickness of 100 µm, and a natural fiber woven fabric and the thermoplastic resin film were alternately disposed thereon so that the uppermost surface was the thermoplastic resin film. A pressure of 2.0 MPa was applied to obtain a fiber-reinforced composite material having a thickness of 1.0 mm. The proportion of natural fibers in the fiber-reinforced composite material was 57 mass%.

The producibility of the prepregs was evaluated as follows. In the evaluation, the result of Reference Example 1 was defined as "S" and used as a benchmark, and the evaluation was performed in comparison with this benchmark. The evaluation was made by a majority voting of five experts.
S: A good prepreg equal to or better than that of Reference Example 1 could be produced
A: Although inferior to that of Reference Example 1, a prepreg at a practical level could be produced
B: A prepreg could be produced; however, the prepreg was not at a practical level
C: A prepreg could not be produced because the natural fibers decomposed

### <Molding of Fiber-Reinforced Composite Material (Prepreg)>

The prepreg obtained above was subjected to vacuum press molding by applying 3 MPa at a temperature of 15°C above the melting point of the thermoplastic resin to obtain a formed article. The proportion of the natural fibers in 100 mass% of the obtained fiber-reinforced composite material was 57 mass%.

The designability of the obtained formed articles was evaluated as follows. In the evaluation, the result of Reference Example 1 was defined as "A" and used as a benchmark, and the evaluation was performed in comparison with this benchmark. The evaluation was made by a majority voting of five experts.
S: The formed article had designability superior to that of Reference Example 1
A: The formed article had designability equal to that of Reference Example 1
B: The formed article had designability inferior to that of Reference Example 1
   - : A prepreg could not be produced, and therefore, no further production was performed.

### Examples 2 to 4, Comparative Examples 1 to 3, and Reference Example 1

Changes from Example 1 were made as indicated in Table 1 below, and others were performed in the same manner.

**[Table 1]**

| | Example 1 | Example 2 | Example 3 | Example 4 | Comparative Example 1 | Comparative Example 2 | Comparative Example 3 | Reference Example 1 |
|---|---|---|---|---|---|---|---|---|
| Fiber type | Natural fibers | Natural fibers | Natural fibers | Natural fibers | Natural fibers | Natural fibers | Natural fibers | Carbon fibers |
| Twisting of fibers | Performed | Performed | Performed | None | Performed | Performed | Performed | Performed |
| Resin type | MXD10 | MP12 | MXD12 | MXD10 | MXD10 | MXD10 | MP10 (40) | MXD10 |
| Melting point of resin (°C) | 190 | 206 | 186 | 190 | 190 | 190 | 225 | 190 |
| Prepreg impregnation temperature (°C) | Tm + 15 | Tm + 15 | Tm + 15 | Tm + 15 | Tm + 50 | Tm + 15 | Tm + 25 | Tm + 50 |
| Atmosphere for producing prepreg | Under non-oxygen | Under non-oxygen | Under non-oxygen | Under non-oxygen | Under non-oxygen | Under oxygen | Under non-oxygen | Under oxygen |
| Producibility of prepreg | S | S | S | A | C | C | C | S |
| Designability | S | S | S | A | - | - | - | A |

In the above, the symbol "Tm" represents a melting point of the thermoplastic resin, the term "under non-oxygen" means that the production was performed under an atmosphere having an oxygen concentration of less than 500 ppm, and the term "under oxygen" means that the production was performed under an air atmosphere.

The above natural fiber-reinforced composite materials all had a degree of impregnation of 95% or greater.

As is clear from the above results, in the present invention, fiber-reinforced composite materials (prepregs) could be produced using natural fibers, and the obtained formed articles also had excellent designability equal to or better than that of the natural fiber-reinforced composite material (prepreg, Reference Example 1) (Examples 1 to 4).

On the other hand, when the impregnation temperature with the thermoplastic resin was high (Comparative Example 1), the natural fibers decomposed, and a prepreg could not be produced. In addition, when a prepreg was produced under oxygen (Comparative Example 2), the natural fibers decomposed, and a prepreg could not be produced. When the melting point of the thermoplastic resin was high, the impregnation temperature became inevitably high (Comparative Example 3), the natural fibers decomposed, and a prepreg could not be produced.

## Claims

1. A fiber-reinforced composite material, comprising:
a thermoplastic resin having a melting point of from 180 to 220°C; and
natural fibers, wherein
the natural fibers are impregnated with at least a portion of the thermoplastic resin; and
the natural fibers are oriented in at least one direction.

2. The fiber-reinforced composite material according to claim 1, wherein
the thermoplastic resin includes a polyamide resin.

3. The fiber-reinforced composite material according to claim 1, wherein
the thermoplastic resin includes a polyamide resin including diamine units and dicarboxylic acid units, wherein
70 mol% or greater of the diamine units are derived from a xylylenediamine.

4. The fiber-reinforced composite material according to claim 1, wherein
the thermoplastic resin includes a polyamide resin including diamine units and dicarboxylic acid units, wherein
70 mol% or greater of the diamine units are derived from a xylylenediamine; and
70 mol% or greater of the dicarboxylic acid units are derived from an α,ω-linear aliphatic dicarboxylic acid having from 4 to 20 carbons.

5. The fiber-reinforced composite material according to any one of claims 1 to 4, wherein
the natural fibers are twisted.

6. The fiber-reinforced composite material according to any one of claims 1 to 5, wherein
the fiber-reinforced composite material is a prepreg.

7. The fiber-reinforced composite material according to claim 6, wherein
the natural fibers are continuous fibers and are oriented in one direction; and
the fiber-reinforced composite material is a prepreg in which the natural fibers are impregnated with the thermoplastic resin.

8. The fiber-reinforced composite material according to claim 6, wherein
the natural fibers are a woven fabric; and
the fiber-reinforced composite material is a prepreg in which the natural fibers are impregnated with the thermoplastic resin.

9. A formed article formed from the fiber-reinforced composite material described in any one of claims 1 to 8.

10. A method for producing the fiber-reinforced composite material described in any one of claims 1 to 8, the method comprising:
impregnating the natural fibers with the thermoplastic resin at a temperature of from 5 to 30°C above a melting point of the thermoplastic resin and under an atmosphere having an oxygen concentration of less than 500 ppm.

11. The method for producing the fiber-reinforced composite material according to claim 10, wherein
the impregnation is performed at a pressure of from 0.1 to 2.0 MPa.
